Europäisches Patentamt

European Patent Office

Office européen des brevets

(11) Veröffentlichungsnummer: **0 433 478 A1**

## (12) EUROPÄISCHE PATENTANMELDUNG

(21) Anmeldenummer: 89123518.6

(22) Anmeldetag: 20.12.89

(51) Int. Cl.⁵: **B32B 5/26**, B32B 9/04,
B32B 7/02

(43) Veröffentlichungstag der Anmeldung:
26.06.91 Patentblatt 91/26

(84) Benannte Vertragsstaaten:
AT BE CH DE FR GB IT LI LU NL SE

(71) Anmelder: SIGRI GmbH
Werner-von-Siemens-Strasse 18
W-8901 Meitingen(DE)

(72) Erfinder: Gruber, Udo, Dipl.-Ing. (FH)
Von Rehlingenstrasse 48a
W-8902 Neusäss(DE)
Erfinder: Janssen, Klaus, Dipl.-Chem.
Eschbacher-Strasse 122
W-7890 Waldschut-Tingen(DE)
Erfinder: Mader, Leo, Dipl.-Chem.
Marienbader-Strasse 5
W-8901 Meitingen(DE)

(54) Schichtkörper aus Kohlenstoffilz und Graphitfolie.

(57) Die Haftung einer auf einem Schichtstoff aus Kohlenstofffilz als letzte Schicht aufgebrachten Graphitfolie wird dadurch verbessert, daß in die auf den Filzstapel mit einem carbonisierbaren Klebemittel aufgeklebten Graphitfolie beim Formgeben in einer heizbaren Matrize gitterartige Eintiefungen gepreßt werden. Bei Temperaturwechselbeanspruchungen treten keine Ablösungen der Folie vom Filz mehr auf.

Fig. 1

## SCHICHTKÖRPER AUS KOHLENSTOFFILZ UND GRAPHITFOLIE

Gegenstand der Erfindung ist ein Schichtkörper aus aufeinandergeschichteten, durch ausgehärtetes Kunstharz fest miteinander verbundenen Lagen Kohlenstoffilz und Graphitfolie, die mit mindestens einer der zwei den Stapel aus Filzlagen nach oben und unten begrenzenden Oberflächen durch ausgehärtetes Kunstharz fest verbunden sind und ein Verfahren zur Herstellung eines derartigen Schichtkörpers durch Übereinanderschichten von mindestens zwei mit Kunstharz imprägnierten Lagen eines Kohlenstoffilzes, Aufbringen einer Lage Graphitfolien unter Verwendung von Kunstharzklebemittel auf mindestens eine der zwei den Stapel aus Filzlagen nach oben und unten begrenzenden Oberflächen, Pressen des Stapels aus Filzlagen und Folien auf eine vorgegebene Dicke und Aushärten der Kunstharzkomponente.

Die Bezeichnung Kohlenstoffilz schließt für diese Erfindung sowohl carbonisierte als auch graphitierte Filze aus Kohlenstoff ein.

Kohlenstoffilze und Schichtkörper aus Kohlenstoffilzen ohne oder mit Auflagen oder Armierungen aus Graphitfolien oder -Platten, werden als hochtemperaturstabile und korrosionsbeständige Auskleidungen und Konstruktionsmaterialien sowie thermische Isolierungen im Ofen- und Apparatebau verwendet. Die Herstellung von Kohlenstofffilzen geschieht durch Carbonisieren und gegebenenfalls Graphitieren von Filzen aus Cellulose-, Woll-, Pech- oder Polyacrylnitrilfasern unter Sauerstoffausschluß. Wegen ihrer Oxidationsempfindlichkeit können sie in Gegenwart von Oxidantien nur bis zu Temperaturen von ca. 400 °C verwendet werden. Bei Abwesenheit oxidierend wirkender Stoffe sind sie bis zu Temperaturen von über 3000 °C beständig. Graphitfolien werden durch Kalandrieren oder Verpressen von expandiertem Graphit erhalten. Zur Herstellung von Filzkörpern größerer Dicke werden Schichtkörper aus Lagen von Kohlenstoffilzen gebildet, die miteinander fest, z.B. durch Verkleben mittels Kunstharzen und nachfolgendes Aushärten verbunden sind. Nach diesem Verfahren hergestellte Kohlenstoffilze und Schichtkörper sind sehr leicht und bis zu einem gewissen Grade kompressibel. Poröse, nicht kompressible Kohlenstofffilze und Schichtkörper werden erhalten, wenn die Kohlenstoffilze oder die Schichtstoffe, z.B. mit einem Kunstharz oder einer Kunstharzlösung imprägniert werden und das Kunstharz ausgehärtet wird. Durch Steuerung der aufgenommenen Menge Imprägniermittel und/oder Zusammenpressen der Filze oder der daraus hergestellten Schichtkörper vor dem Aushärten können die scheinbare Dichte, die Porosität, die Wärmeleitfähigkeit und die mechanische Festigkeit der so gewonnenen Werkstoffe in weiten Grenzen variiert werden. Kohlenstoffilze und Schichtstoffe, deren Kunstharzanteil nur ausgehärtet wurde, sind gegen eine Vielzahl von aggressiven Agenzien beständig. Sie sind jedoch nur bis zur thermischen Belastungsgrenze der Kunstharzkomponente einsetzbar. Durch Carbonisieren und gegebenen falls Graphitieren werden Körper erhalten, die vollständig aus Kohlenstoff bestehen und damit gegenüber nicht oxidierend wirkenden Medien oder im Vakuum bis zu Temperaturen von über 3000 °C einsetzbar sind. Bei sehr hohen Temperaturen nimmt die Isolierwirkung poröser Filzschichten beträchtlich ab, da der Anteil der durch Strahlung übertragenen Energie wächst. Es ist deshalb vorgeschlagen worden, die der heißen Seite, z.B. einem Ofeninnenraum zugewandte Oberfläche von Wärmeisolierungen aus Filz mit Wärme- und Strahlungsschilden aus Graphitfolie zu versehen (DE-PS 18 14 052). Durch die DE-PS 28 53 397 ist ein sehr ähnliches Isolationsmaterial bekannt geworden, das aus einer Schicht Kohlenstoffilz mit einer Rohdichte von 0,13 bis 0,20 g/cm³ und einer mit der Filzschicht über Koksbrücken fest verbundenen, gasundurchlässigen Bahn aus Graphitfolie besteht. Dieses Wärmeisolationsmaterial wird hergestellt, indem man die Graphitbahn unter Verwendung einer bestimmten Menge eines carbonisierbaren Harzes auf die Filzbahn klebt, die so erhaltene Verbundstruktur unter einem Druck von 5 bis 30 kPa einer Härtungsbehandlung und danach einer Carbonisierungsbehandlung unterwirft. Nach einer Variante des Verfahrens wird die gasdurchlässige Filzbahn vor dem Aufkleben der Graphitfolie mit dem carbonisierbaren Harz imprägniert. Bei dieser Wärmeisolierung hat die Graphitfolie neben der Wirkung als Strahlungsschild die Aufgabe, die Filzschicht mechanisch zu schützen und zu versiegeln, insbesondere Abrieb durch strömende Gase oder Berührung mit Chargiergut oder eine Kontamination des Filzes mit seine Stabilität schädigenden Substanzen zu verhindern.

Ein Nachteil der bekannten Wärmeisolierungen aus einer Isolierschicht aus Kohlenstoffilz und einer Auflage aus Graphitfolie ist das häufig zu beobachtende Lockern der Verbindung zwischen Graphitfolie und Filzunterlage, die den Gebrauchswert derartiger Isolierungen beeinträchtigt und zu Betriebsstörungen führen kann. Wie aus der EP-OS 0 248 918 hervorgeht, wird als Ursache dieses Effekts die Freisetzung gasförmiger Verbindungen aus der Folie in Verbindung mit der geringen Haftung der Folie auf ihrer Unterlage, verursacht durch die schlechte Benetzbarkeit der glatten Folienoberfläche durch den Kleber, angesehen. Zur Lösung des Problems wird dort die Verwendung einer Graphitfolie mit Durchbrechungen vorgeschlagen. Durch die Durchbrechungen sollen die schädlichen Gase abziehen, ohne daß ein schädlicher Gasdruck aufgebaut wird. Außerdem führen die leicht rauhen Ränder der Durchbrechungen zu einer besseren Verankerung der Binderkomponente in der Folie.

Trotz dieser Verbesserungen kommt es bei der Herstellung und Verwendung von Schichtkörpern aus Kohlenstoffilz mit einer Auflage von Graphitfolien immer wieder zu teilweisen oder nach längerem Betrieb auch vollständigen Ablösungen der Graphitfolien von der Filzunterlage. Als Hauptgrund für diese Schäden werden die unterschiedlichen thermischen Ausdehnungskoeffizienten der Graphitfolie, des Filzkörpers und der beide verbindenden Kunstharz- bzw. der nach dem Carbonisieren daraus entstandenen Kohlenstoffschicht gesehen. Bei thermischen oder mechanischen Belastungen übersteigen im kritischen Falle die Spannungen in dieser Zone die Materialfestigkeit der an der Verbindung beteiligten Komponenten und es kommt zu den beschriebenen Ablösungen.

Der Erfindung liegt die Aufgabe zugrunde, 1. einen Schichtkörper aus aufeinandergeschichteten Lagen aus Kohlenstoffilz und einer abschließenden Lage aus Graphitfolie, die mit der Oberfläche der ersten oder/und der letzten Lage Kohlenstoffilz verbunden ist, zu schaffen. Dabei sollen die Lagen Kohlenstoffilz und die Graphitfolie durch ausgehärtetes oder nach dem Aushärten carbonisiertes Kunstharz miteinander verbunden sein und die Graphitfolie so fest in der Unterlage aus Kohlenstoffilz verankert sein, daß ein Ablösen nicht mehr eintritt. Es soll 2. ein Verfahren zur Herstellung eines derartigen Schichtkörpers zur Verfügung gestellt werden.

Die Aufgabe wird

1. mit einem Schichtkörper der eingangs genannten Art, bei dem die Graphitfolie gitterartige Vertiefungen aufweist und

2. durch ein Herstellungsverfahren der eingangs genannten Art, bei dem beim Pressen des Stapels aus Filz- und Folienlage(n) auf die Außenseite der Graphitfolie(n) ein Prägegitter einwirkt, gelöst.

Der Erfindung liegt die Erkenntnis zugrunde, daß beim Einpressen der gitterartigen Vertiefungen in die Graphitfolie auf der den Filzlagen zugekehrten und dem Preßstempel abgewandten Seite der Folie entsprechende Ausformungen entstehen, die in die anliegende Filzlage eingedrückt werden und zusammen mit dem Kunstharzkleber eine bessere Verankerung der Graphitfolie im Kohlenstoffilz bewirkt. Zusätzlich bildet sich bei diesem Preßvorgang an der Oberfläche des Schichtkörpers ein Raster aus kissenförmigen Erhebungen. Durch mechanische Beanspruchungen und durch die unterschiedlichen thermischen Ausdehnungskoeffizienten der miteinander verbundenen Komponenten bei Temperaturänderungen entstandene Spannungen werden mit Hilfe dieser kissenförmigen Erhebungen durch Dehnungs- und Stauchungsprozesse abgebaut. Dieser Spannungsabbau findet in jedem der kissenförmigen Segmente statt. Damit wird eine Verteilung der Spannungen erreicht und die Ausbildung von Spannungsspitzen in kritischen Bereichen verhindert.

Erfindungsgemäße Schichtkörper können aus einer oder mehreren Lagen Kohlenstoffilz mit einer sich der Abfolge der Schichtung der Filzlagen anschließenden ein- oder beidseitigen Auflage einer Graphitfolie bestehen. Bei einer Ausführungsform des Schichtkörpers ist die Kunstharzkomponente nur ausgehärtet. Derartige Körper sind im Niedertemperaturbereich bis zur Beständigkeitsgrenze der Kunstharze von ca. 200 $^{\circ}$C für bestimmte Anwendungen geeignet. Der Schwerpunkt der Anwendungsmöglichkeiten liegt jedoch im Bereich der Wärmeisolierung von Öfen, sowie der Auskleidung und Isolierung von Rohren, Behältern und Vorrichtungen, die im Kontakt mit heißen Gasen und Schmelzen stehen. Deshalb werden die Schichtkörper durch Erhitzen auf mindestens 600, vorzugsweise 800 $^{\circ}$C carbonisiert oder durch Erhitzen auf mindestens 2400, vorzugsweise 2800 $^{\circ}$C graphitiert. Entsprechend den Anforderungen kann auch bei Temperaturen oberhalb 800 $^{\circ}$C carbonisiert oder oberhalb 2800 $^{\circ}$C graphitiert werden. So behandelte Schichtkörper sind in Schutzgasatmosphäre und im Vakuum bis zu Temperaturen von 3000 $^{\circ}$C und darüber beständig.

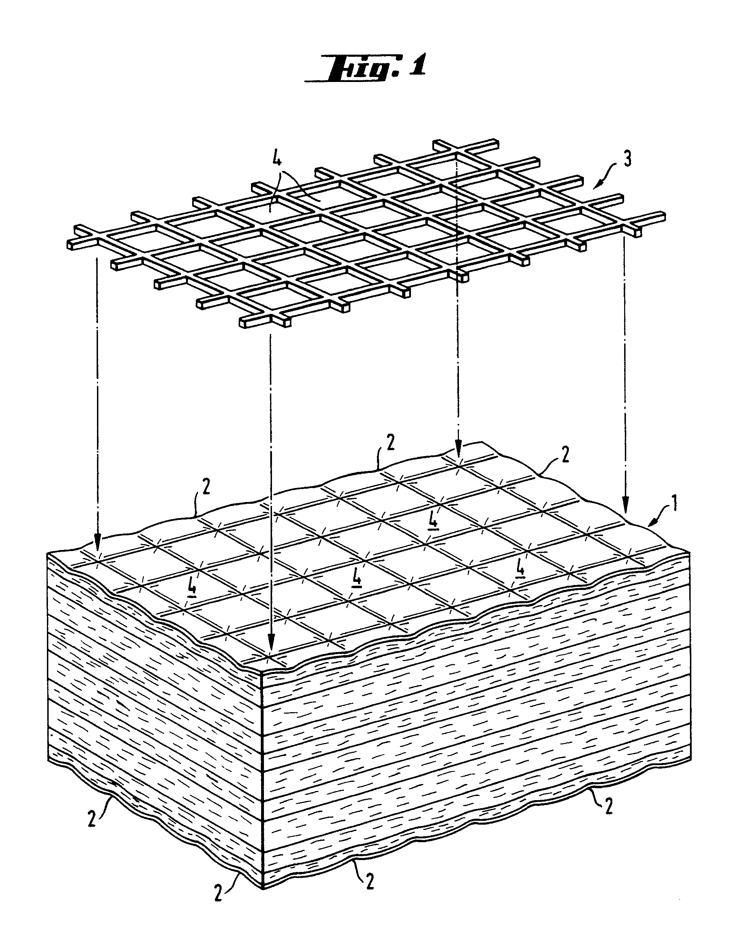

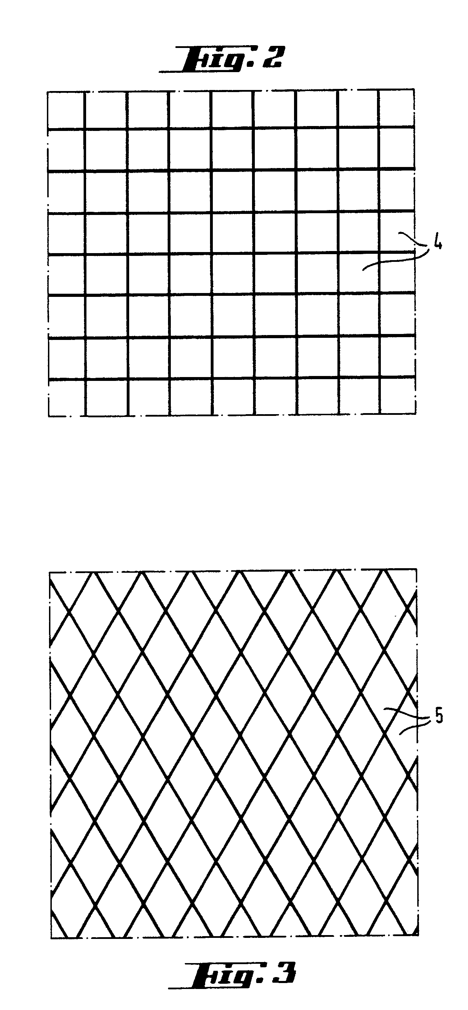

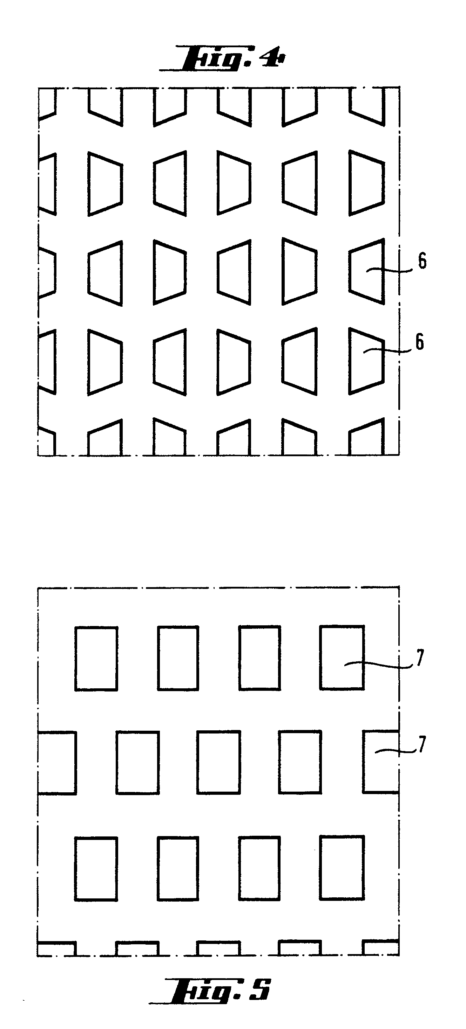

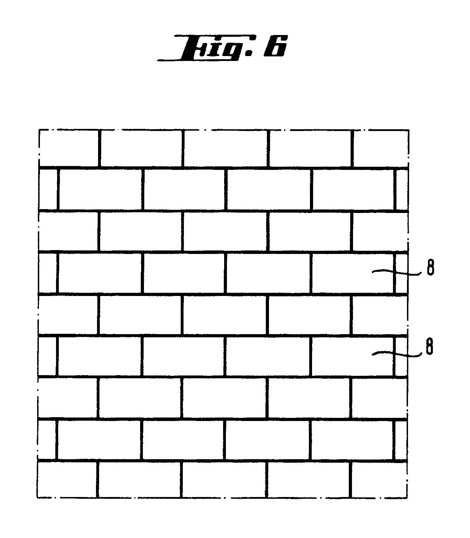

Fig.1 zeigt in Perspektive ausschnittsweise einen fertigen Schichtkörper 1 mit gitterförmigen Eintiefungen 2. Darüber ist die beispielsweise quadratisch gemusterte 4 Ausführung eines Prägegitters 3 angeordnet.

Die äußere Begrenzung der Segmente der gitterförmigen Eintiefungen 2 kann im Prinzip jede zweidimensionale ornamentale Form haben. Der kürzeste Abstand zwischen zwei sich gegenüberliegenden Seiten eines Segments bzw. bei Figuren mit gekrümmten Begrenzungslinien die kürzeste Achse soll jedoch mindestens 5 mm betragen. Vorzugsweise werden jedoch Gittermuster verwendet, die aus geraden, sich schneidenden Linien entstehen, also aus Quadraten 4, Rechtecken oder Parallelogrammen 5 bestehende Muster, wie sie beispielhaft den Fig. 2 und 3 zu entnehmen sind. Anwendbar sind auch Muster mit im Abstand, also inselartig angeordneten Quadraten, Trapezen 6, Rechtecken 7, Parallelogrammen oder regelmäßigen Vielecken. Beispiele dazu sind in den Fig. 4 und 5 dargestellt. Schließlich können auch aus Reihen untereinander versetzt angeordneter Quadrate, Rechtecke 8 oder Trapeze (siehe als Beispiel Fig. 6), oder durch Zusammensetzen regelmäßiger Vielecke entstandene Muster Verwendung finden. Wo es die Umstände erfordern, können auch Kombinationen verschiedener Muster eingeprägt werden.

Die Tiefe der Einprägungen soll mindestens 0,2 und höchstens 4 mm, gemessen vom Niveau der äußeren Oberfläche am Schnittpunkt der Diagonalen oder der Haupt-und Nebenachsen eines Gittersegmentes aus betragen. Bei durch gerade Linien begrenzten Gittersegmenten soll die Kantenlänge eines Segments mindestens 5 und höchstens 100 mm und der Abstand zwischen zwei sich gegenüberliegenden Seiten mindestens 5 und höchstens 100 mm betragen. Bei Anwendung kleinerer als der angegebenen Kantenlängen, Abstände oder Tiefen wird die Graphitfolie entweder beim Anpressen durch das Prägegitter beschädigt oder es kann, falls solche Beschädigungen vermieden werden sollen, kein für eine gute Verankerung der Folie im Filz ausreichender Anpreßdruck aufgegeben werden. Die den Schichtkörper nach außen begrenzende Folie kann geschlossen oder wie in der EP-05 0 248 918 beschrieben, mit Durchbrechungen versehen sein.

Zur Herstellung eines erfindungsgemäßen Schichtkörpers werden in bekannter Weise mit einem Kunstharz oder einer Kunstharzlösung imprägnierte Lagen eines beliebigen Kohlenstoffilzes übereinandergeschichtet und auf diesen Stapel von Filzlagen eine Graphitfolie aufgelegt, deren dem Filzstapel zugekehrte Seite mit einem Kunstharzklebemittel eingestrichen ist. Wenn der Schichtkörper oben und unten von einer Folienlage begrenzt sein soll, wird zusätzlich entsprechend als unterste Lage eine mit Kunstharzkleber bestrichene Graphitfolie ausgelegt und auf diese die Filzlagen und die abschließende obere Folienlage abgelegt. Für die Herstellung dünner Schichtkörper ist es ausreichend, nur eine Filzlage zu imprägnieren und diese ein- oder beidseitig mit Graphitfolien zu belegen. Wenn die Filzlagen genügend Kunstharz enthalten, kann die Folie auch ohne Einstreichen mit Kunstharzkleber aufgelegt werden. Um die Verklebung zu optimieren, kann die Folie auch auf ihrer dem Filzstapel zugewandten Seite leicht angerauht werden. Als Imprägnierungs- und Klebemittel eignen sich alle gebräuchlichen, härtbaren Kunstharze, wie Phenol-, Epoxid oder Furanharze sowie Lösungen davon, sofern sie beim Carbonisieren eine Koksausbeute von mehr als 20 % haben. Häufig sind Kunstharzimprägniermittel und Kunstharzkleber identisch. Es können auch hochschmelzende Thermoplaste oder auch Peche Verwendung finden, doch ist deren Verarbeitung sehr aufwendig, weil die im vorstehenden aufgeführten Arbeitsschritte oberhalb der Schmelztemperatur ausgeführt werden müssen und auch die folgenden Arbeitsgänge des Aushärtens unter Druck und Carbonisierung hohen Aufwand erfordern.

Als Graphitfolien können die käuflichen Produkte mit Dicken von 0,2 bis 2,0 mm und Rohdichten von 0,3 bis 1,2 g/cm³ verwendet werden. Es können Folien mit dichter Oberfläche oder Folien mit Oberflächen, die Durchbrechungen aufweisen, Einsatz finden. Der aufgeschichtete Stapel aus Folie(n) und Filzlagen wird in eine Presse gebracht. Dort wird er auf die gewünschte Dicke komprimiert und die Kunstharzkomponente unter Beibehaltung des Kompressionsdruckes ausgehärtet. Das Aushärten geschieht in der Regel unter Temperatureinwirkung, wobei die Wahl der Temperatur von den Erfordernissen des verwendeten Imprägniermittels oder/und Klebers abhängt. Das Aushärten kann aber auch mittels Katalysatoren oder nach einem kombinierten Verfahren erfolgen.

Die Druckplatte des Preßstempels, und bei beidseitiger Beschichtung des Filzstapels mit Graphitfolie auch die Bodenplatte der Matrize sind mit einem Prägegitter belegt, das beim Preßvorgang die erfindungsgemäßen Eintiefungen in die Graphitfolie prägt. Die Ausgestaltung der Prägemuster wurde bereits im vorstehenden beschrieben. Die Höhe der Prägekanten ist im Vergleich zu den geprägten Eintiefungen in der Folie unterschiedlich, da die Graphitfolie nach dem Entlasten etwas rückfedert. Die Höhe der Prägekanten beträgt dementsprechend mindestens 0,3 und höchstens 5 mm, bezogen auf den tiefsten Punkt in der Druckplatte des Stempels bzw. der Bodenplatte der Matrize. Um Kerbwirkungen zu vermeiden, sind die sich in die Graphitfolien eindrückenden Oberflächen des Prägegitters abgerundet und glatt ausgebildet. Sie dürfen keine scharfen Kanten haben. Der Krümmungsradius der Prägekanten hängt von der Höhe des Prägegitters ab und beträgt 1/2 bis 1/5 dieser Höhe. Bei einer 5 mm hohen Prägekante beträgt der Krümmungsradius dementsprechend im allgemeinen 1 mm und bei einer Höhe von 3 mm ist er nicht größer als ca. 1,5 mm. Bei zwischen diesen Werten liegenden Höhen werden dem gewünschten Ergebnis entsprechend angepaßte Radien gewählt. Das Prägegitter kann in unterschiedlicher Weise in der Presse angeordnet werden. Es kann als separates, in die Presse einlegbares Gitter ausgeführt, an der Druckplatte des Stempels oder/und der Bodenplatte der Matrize mit bekannten Mitteln befestigt und schließlich in die Druckplatte des Stempels oder/und die Bodenplatte der Matrize eingearbeitet sein.

Die nach dem Pressen erhaltenen Schichtkörper mit ausgehärteter Kunstharzkomponente sind für Anwendungen bis zu Temperaturen von ca. 200 °C einsetzbar. Für Anwendungen bei höheren Temperaturen müssen sie carbonisiert werden. Dazu werden sie in bekannter Weise in einer Inertgasatmosphäre oder von einem oxidierende Gase aufnehmenden Getter umgeben auf eine Temperatur von mindestens 600 °C, vorzugsweise von 800 bis 1000 °C erhitzt. So hergestellte Schichtkörper sind in Schutzgasatmosphäre oder im Vakuum bis zu Temperaturen von 3000 °C und darüber beständig. Für spezielle Anwendungen können die Schichtkörper nach dem Carbonisieren noch nach einem der bekannten Verfahren bei Temperaturen von mindestens 2400 °C graphitiert werden.

4

Gegenüber bekannten, aus Kohlenstoffilz und einer Deckschicht aus Graphitfolie bestehenden Schichtkörper haben die erfindungsgemäßen Schichtkörper mehrere Vorteile. Durch das stärkere Einpressen der Graphitfolie in den Kohlenstoffilz mittels des erfindungsgemäßen Gitters kommt es in allen Zustandsformen der Schichtkörper, ausgehärtet, carbonisiert und graphitiert, zu einer stärkeren Haftung der Folie auf dem Filz. Unabhängig von der Art des Filzes werden die beim Herstellungsvorgang und bei der Verwendung auftretenden Schrumpfungen und Dehnungen durch die kissenförmige Form der eingeprägten Foliensegmente ausgeglichen. Die bei den herstellungs- und verwendungsbedingten Schrumpfungen und Dehnungen in der Verbindungszone zwischen Graphitfolie und Kohlenstoffilz auftretenden Scher-, Zug- und Druckspannungen übersteigen nie die Eigenfestigkeit der Verbindung der zwei Werkstoffe. Ablösungen der Graphitfolie von der Filzunterlage kommen deshalb nicht mehr vor. Durch die leichte Wellung der Folienoberfläche wird bei der Verwendung des Schichtstoffes in Öfen eine diffuse Wärmerückstrahlung und damit eine gleichmäßigere Temperaturverteilung bewirkt. Mit dem beschriebenen Herstellungsverfahren können erfindungsgemäße Schichtkörper in allen erforderlichen Ausführungsvarianten bezüglich Ausgangsmaterialien, Anordnung der Schichten, Imprägnierungs- und Verdichtungsgrad sowie Wahl der Art der Prägung der Eintiefungen in rationeller Weise ohne höheren Aufwand als bekannte Schichtkörper hergestellt werden.

Im folgenden wird die Erfindung anhand eines Beispieles erläutert.

Zur Herstellung eines erfindungsgemäßen Schichtstoffes wurden 5 Lagen eines bei 1000 °C verkokten und mit einem Phenolformaldehydharz imprägnierten Cellulosefilzes mit den Maßen 10 x 500 x 1000 mm je Lage, zu einem Stapel aufgeschichtet. Der Phenolformaldehydgehalt im Filz betrug 57 Gew.-%. Auf die Oberseite des Filzstapels wurde eine käuflich erwerbbare Graphitfolie, Dicke 0,35 mm, Rohdichte 1,0 g/cm$^3$, in die zuvor mit einer Nadelwalze feine Löcher (Durchmesser ca. 0,1 mm) im Abstand von ca. 2,5 mm eingebracht worden waren, gelegt. Dieser Stapel wurde so in die auf 80 °C aufgeheizte Matrize einer hydraulischen Presse gelegt, daß die Folienlage den oberen Abschluß bildete. Sodann wurde auf die Folienlage ein 1 mm starkes Lochblech aus Stahl St.12.03 mit einer Quadratlochung, Lochweite 10 x 10 mm. Stegbreite 2,0 mm gelegt, die ebenfalls auf 80 °C temperierte Preßplatte in die Matrize eingefahren und der Stapel mit einem Preßdruck von 3,5 bar gegen in der Matrize befindliche Abstandshalter auf 23 mm Höhe verdichtet. Zum Aufpressen der Graphitfolie und zum Vergleichmäßigen der Harzimprägnierung wurde dieser Preßzustand ca. 60 Min. aufrechterhalten. Danach wurde die Presse geöffnet, wobei der Schichtkörper auf ein Maß von ca. 46 mm Höhe aufatmete. Nach dem Einstellen der Abstandshalter auf eine Höhe von 42,5 mm wurde der Stapel auf diese Höhe verdichtet und in der Matrize innerhalb von 3 Stunden bei 140 °C ausgehärtet. Nach dem Ausbau hatte der Schichtkörper eine Rohdichte von 0,23 g/cm$^3$. Bei der folgenden Carbonisierungsbehandlung (140 Stunden von Raumtemperatur auf 1000 °C) schrumpfte der Körper um ca. 1,5 % und die Rohdichte erniedrigte sich auf 0,20 g/cm$^3$. Nach dem Graphitieren (8 Stunden bei 2000 °C), das von einer Volumenausdehnung des Körpers von 1 begleitet war, betrug die Rohdichte 0,19 g/cm$^3$. An diesem Schichtkörper wurden folgende, weitere Kennwerte ermittelt: Biegefestigkeit, 0,8 bis 1,0 MPa, Druckfestigkeit, > 1,0 MPa, Wärmeleitfähigkeit $_{(20 °C)}$, 0,12 W/mK, Wärmeleitfähigkeit $_{(2000 °C)}$, 0,7 W/mK, Permeabilitätskoeffizient, 5 $\cdot$ 10$^{-3}$ cm$^2$/sec.

Zu Vergleichszwecken wurde unter den gleichen Herstellungsbedingungen wie für das erfindungsgemäße Beispiel beschrieben unter Verwendung der gleichen Materialien aber ohne Anwendung des als Prägegitter wirkenden Lochblechs ein Schichtstoff gleicher Abmessungen hergestellt. Die während und nach der Herstellung gemessenen Kennwerte dieses Vergleichsschichtstoffes waren innerhalb der Meßtoleranzen denen des erfindungsgemäßen Schichtstoffes gleich. Ein beträchtlicher Unterschied wurde aber bei der Bestimmung der Haftfestigkeit der Graphitfolien auf der Filzunterlage mittels eines Zugversuches, gemessen an Probekörpern 50 x 50 x 42,5 mm festgestellt:

| Kraft zum Abziehen der Graphitfolie von der Unterlage aus Kohlenstoffilz (N) | | | | | |
|---|---|---|---|---|---|
| Probe Nr. | 1 | 2 | 3 | 4 | 5 |
| Filzschichtstoff mit perforierter Graphitfolie und eingeprägten Eintiefungen (erfindungsgemäße Ausführung) | 249 | 306 | 242 | 242 | 246 |
| Filzschichtstoff mit perforierter Graphitfolie ohne eingeprägte Eintiefungen (Stand der Technik) | 130 | 106 | 130 | 80 | 102 |

Der Vergleich der Meßwerte zeigt zweifelsfrei die Wirksamkeit der erfinderischen Maßnahme.

## Ansprüche

1. Schichtkörper aus aufeinandergeschichteten, durch ausgehärtetes Kunstharz miteinander verbundenen Lagen Kohlenstoffilz und Graphitfolie, die mit mindestens einer der zwei den Stapel aus Filzlagen nach oben und unten begrenzenden Oberflächen durch ausgehärtetes Kunstharz fest verbunden sind,
dadurch gekennzeichnet, daß
die Graphitfolie gitterartige Eintiefungen aufweist.

2. Schichtkörper nach Patentanspruch 1,
aus einer Lage Kohlenstoffilz und Graphitfolie.

3. Carbonisierter Schichtkörper nach den Patentansprüchen 1 und 2.

4. Carbonisierter und graphitierter Schichtkörper nach den Patentansprüchen 1 und 2.

5. Schichtkörper nach den Patentansprüchen 1, 2, 3 und 4,
dadurch gekennzeichnet, daß
die Kantenlänge eines Segments der gitterartigen Eintiefungen mindestens 5 und höchstens 100 mm, der Abstand zwischen zwei sich gegenüberliegenden Seiten eines Segments mindestens 5, höchstens 100 mm und die Tiefe der Eintiefungen mindestens 0,2 und höchstens 4 mm, gemessen von der äußeren Oberfläche am Schnittpunkt der Diagonalen eines Gittersegments aus beträgt.

6. Schichtkörper nach den Patentansprüchen 1, 2, 3, 4 und 5,
dadurch gekennzeichnet, daß
die Graphitfolie perforiert ist.

7. Verfahren zur Herstellung eines Schichtkörpers nach den Patentansprüchen 1 bis 6 durch Übereinanderschichten von mindestens zwei mit Kunstharz imprägnierten Lagen eines Kohlenstoffilzes,
Aufbringen einer Lage Graphitfolien unter Verwendung von Kunstharzklebemitteln auf mindestens eine der zwei den Stapel aus Filzlagen nach oben und unten begrenzenden Oberflächen,
Pressen des Stapels aus Filzlagen und Folien auf eine vorgegebene Dicke
und Aushärten der Kunstharzkomponente,
dadurch gekennzeichnet, daß
beim Pressen des Stapels auf die Außenseite der Graphitfolien ein Prägegitter einwirkt.

8. Verfahren nach Patentanspruch 7,
dadurch gekennzeichnet, daß
für die Herstellung eine Lage Filz verwendet wird.

9. Verfahren nach den Patentansprüchen 7 und 8,
dadurch gekennzeichnet, daß
der Schichtkörper carbonisiert wird.

10. Verfahren nach den Patentansprüchen 7, 8 und 9,
dadurch gekennzeichnet, daß
der Schichtkörper graphitiert wird.

11. Verfahren nach den Patentansprüchen 7, 8, 9 und 10
dadurch gekennzeichnet, daß
die Segmente des Prägegitters eine Kantenlänge von mindestens 5 und höchstens 100 mm haben, der Abstand zwischen zwei sich gegenüberliegenden Seiten eines Segments mindestens 5 und höchstens 100 mm beträgt und das Prägegitter eine Höhe von mindestens 0,3 und höchstens 5 mm gemessen von der Oberfläche des Preßstempels am Schnittpunkt der Diagonalen oder der Seitenhalbierenden eines Gittersegmentes hat.

12. Verfahren nach den Patentansprüchen 7, 8, 9, 10 und 11,
dadurch gekennzeichnet, daß
eine perforierte Graphitfolie verwendet wird.

## Fig. 1

## Fig. 2

4

5

## Fig. 3

Fig. 4

Fig. 5

## Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-2853397 (KUREHA KAGAKU KOGYO K.K.) <br> * Seite 11, Absatz 2 – Seite 13, Zeile 4 * <br> * Seite 17, Absatz 2 – Seite 18, Absatz 1 * <br> * Figur 2 * <br> * Ansprüche 1-5, 9, 11, 12 * <br> * Ansprüche 14, 17 * <br> --- | 1-4, 7-10 | B32B 5/26 <br> B32B 9/04 <br> B32B 7/02 |
| A | GB-A-1310355 (FOSECO TRADING A.G.) <br> * Seite 2, Zeile 22 – Seite 2, Zeile 95 * <br> * Seite 3, Zeile 51 – Seite 3, Zeile 64; <br> Ansprüche 1, 4, 5, 9, 10 * <br> --- | 7-9 | |
| A | US-A-4515847 (A.R. TAVERNA ET AL.) <br> * Spalte 3, Zeile 19 – Spalte 3, Zeile 47; <br> Anspruch 1 * <br> ----- | 3, 4, 9, 10 | |
| | | | RECHERCHIERTE SACHGEBIETE (Int. Cl.5) <br><br> C04B <br> B32B |

Der vorliegende Recherchenbericht wurde für alle Patentansprüche erstellt

| Recherchenort | Abschlußdatum der Recherche | Prüfer |
|---|---|---|
| DEN HAAG | 14 AUGUST 1990 | DERZ T. |